# EUROPEAN PATENT APPLICATION

(11) **EP 4 737 779 A2**
(43) Date of publication of application: **06.05.2026**
(21) Application number: 25212747.7
(22) Date of filing: 31.10.2025
(51) Int. Cl.: F16L 3/10, F16L 55/035

(54) **METHOD OF REDUCING SADDLE CLAMP ASSEMBLY STRESS**

(30) Priority: 31.10.2024 US 202418933565
(71) Applicant: RTX Corporation, Farmington, CT 06032 (US)
(72) Inventor: CZARNIECKI, Gage, Farmington, 06032 (US); LOPEZ PADILLA, Jose L, Farmington, 06032 (US); SWOPE, Aaron Jayson, Farmington, 06032 (US); SABINO, Gianna Eva Marie, Farmington, 06032 (US)
(74) Representative: Dehns

(57) **Abstract**

A method of assembling a tube assembly (100) includes the steps of providing a saddle clamp (104) having a first clamp half (109) extending for less than 50 percent of a circumference of a tube (102), and a second clamp half (108) extending for more than 50 percent of the circumference of the tube (102), placing a tube (102) on the first clamp half (109), resting on a static structure (106), and applying a lubricant (122) to a laterally inner surface (117) of the second clamp half (108) and then bringing the second clamp half (108) onto the tube (102), and then driving a fastener (110) to secure the first and second clamp halves (108, 109). A gas turbine engine (20) is also disclosed.

## Description

### BACKGROUND

This application relates to a method of assembling a saddle clamp over a tube wherein the assembly stress on the saddle clamp parts is reduced.

Tubes are utilized in any number of systems to route liquids for various purposes. The tube is preferably maintained in a predictable fixed position by plural clamps. One type of clamp is a so-called saddle clamp. In a saddle clamp a smaller portion of the circumference of the tube is supported on a bottom half. The upper half extends for more than half of the circumference of the tube.

The tube is typically placed in the lower half, with bolt flanges on the lower half extending laterally outwardly. The upper half is then moved onto the tube, and forced such that its bolt flanges contact the bolt flanges of the lower half. Typically one side of the halves is bolted then the other side is bolted.

As the assembly is occurring, the bottom clamp flange creates a flush mating with a stationary surface below. This generates an anchoring point on a grommet that is part of the lower half.

When this occurs, instead of half the clamp stretching half the distance to be installed, the upper half must stretch from that anchoring point around about three quarters of the tube in order to be seated on the other side.

When this occurs there is undesirably high stress in the upper half. In particular, the highest stress is on the first bolted bolt flange.

One common use of saddle clamps is to mount a tube in gas turbine engines.

### SUMMARY

In a featured embodiment, a method of assembling a tube assembly includes the steps of providing a saddle clamp having a first clamp half extending for less than 50 percent of a circumference of a tube, and a second clamp half extending for more than 50 percent of the circumference of the tube, placing a tube on the first clamp half, resting on a static structure, and applying a lubricant to a laterally inner surface of the second clamp half and then bringing the second clamp half onto the tube, and then driving a fastener to secure the first and second clamp halves.

In another embodiment according to the previous embodiment, there are a pair of the bolt flanges on opposed sides of the tube for each of the first and second clamp halves.

In another embodiment according to any of the previous embodiments, the fastener is initially driven into the bolt flanges on one side of the tube, and then a second fastener is driven through the bolt flanges on the other side of the tube.

In another embodiment according to any of the previous embodiments, each of the first and second halves have a metal underlying structure with outwardly extending bolt flanges and a supporting grommet and the fastener extends through the bolt flanges.

In another embodiment according to any of the previous embodiments, the bolt flanges on the second clamp half rests on the bolt flanges of the first clamp half.

In another embodiment according to any of the previous embodiments, the lubricant is only placed on the inner surface of the second clamp half.

In another embodiment according to any of the previous embodiments, the fastener secures the saddle clamp to the static structure.

In another embodiment according to any of the previous embodiments, the lubricant is a liquid.

In another embodiment according to any of the previous embodiments, the lubricant is a liquid.

In another embodiment according to any of the previous embodiments, the lubricant is only placed on the inner surface of the second clamp half.

In another embodiment according to any of the previous embodiments, the fastener secures the saddle clamp to the static structure.

In another embodiment according to any of the previous embodiments, the lubricant is only placed on the inner surface of the second clamp half.

In another embodiment according to any of the previous embodiments, the lubricant is a liquid.

In another embodiment according to any of the previous embodiments, the lubricant is a liquid.

In another embodiment according to any of the previous embodiments, the lubricant is only placed on the inner surface of the second clamp half.

In another featured embodiment, a gas turbine engine includes a compressor section, a turbine section and combustor. A tube assembly routes a fluid for use in the gas turbine engine. The tube assembly has a saddle clamp with a first clamp half extending for less than 50 percent of a circumference of a tube, and a second clamp half extending for more than 50 percent of the circumference of the tube. Each of the first and second half have a metal underlying structure with outwardly extending bolt flanges and a supporting grommet. The tube is supported on the grommets of the first and second clamp halves, with the bolt flange of the first clamp half resting on a static structure, and a lubricant on a laterally inner surface of the second clamp half. A bolt extends through the bolt flanges to secure the first and second clamp halves to the static structure clamp halves.

In another embodiment according to any of the previous embodiments, there are a pair of the bolt flanges on opposed sides of the tube for each of the first and second clamp halves.

In another embodiment according to any of the previous embodiments, the lubricant is a liquid.

In another embodiment according to any of the previous embodiments, lubricant is not on the first clamp half.

In another embodiment according to any of the previous embodiments, the lubricant is a liquid.

The present disclosure may include any one or more of the individual features disclosed above and/or below alone or in any combination thereof.

These and other features of the present invention can be best understood from the following specification and drawings, the following of which is a brief description.

### BRIEF DESCRIPTION OF THE DRAWINGS

Figure 1 schematically shows a gas turbine engine.
Figure 2 shows a tube saddle clamp which may be utilized in a gas turbine engine.
Figure 3 is a view of the saddle clamp.
Figure 4 is a cross-sectional view through the assembly of Figure 2.
Figure 5A shows a first step in assembling the clamp assembly.
Figure 5B shows a subsequent assembly step.
Figure 6 graphically shows a reduction in strain with the disclosed method.

### DETAILED DESCRIPTION

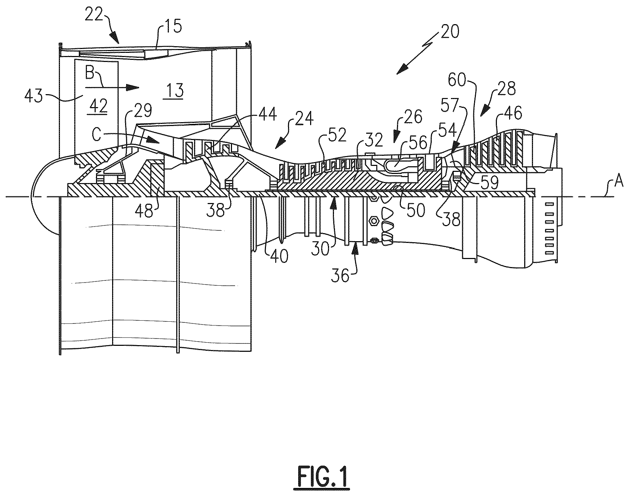

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 may include a single-stage fan 42 having a plurality of fan blades 43. The fan blades 43 may have a fixed stagger angle or may have a variable pitch to direct incoming airflow from an engine inlet. The fan 42 drives air along a bypass flow path B in a bypass duct 13 defined within a housing 15 such as a fan case or nacelle, and also drives air along a core flow path C for compression and communication into the combustor section 26 then expansion through the turbine section 28. A splitter 29 aft of the fan 42 divides the air between the bypass flow path B and the core flow path C. The housing 15 may surround the fan 42 to establish an outer diameter of the bypass duct 13. The splitter 29 may establish an inner diameter of the bypass duct 13. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures. The engine 20 may incorporate a variable area nozzle for varying an exit area of the bypass flow path B and/or a thrust reverser for generating reverse thrust.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in the exemplary gas turbine engine 20 is illustrated as a geared architecture 48 to drive the fan 42 at a lower speed than the low speed spool 30. The inner shaft 40 may interconnect the low pressure compressor 44 and low pressure turbine 46 such that the low pressure compressor 44 and low pressure turbine 46 are rotatable at a common speed and in a common direction. In other embodiments, the low pressure turbine 46 drives both the fan 42 and low pressure compressor 44 through the geared architecture 48 such that the fan 42 and low pressure compressor 44 are rotatable at a common speed. Although this application discloses geared architecture 48, its teaching may benefit direct drive engines having no geared architecture. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

Airflow in the core flow path C is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core flow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The fan 42 may have at least 10 fan blades 43 but no more than 20 or 24 fan blades 43. In examples, the fan 42 may have between 12 and 18 fan blades 43, such as 14 fan blades 43. An exemplary fan size measurement is a maximum radius between the tips of the fan blades 43 and the engine central longitudinal axis A. The maximum radius of the fan blades 43 can be at least 40 inches, or more narrowly no more than 75 inches. For example, the maximum radius of the fan blades 43 can be between 45 inches and 60 inches, such as between 50 inches and 55 inches. Another exemplary fan size measurement is a hub radius, which is defined as distance between a hub of the fan 42 at a location of the leading edges of the fan blades 43 and the engine central longitudinal axis A. The fan blades 43 may establish a fan hub-to-tip ratio, which is defined as a ratio of the hub radius divided by the maximum radius of the fan 42. The fan hub-to-tip ratio can be less than or equal to 0.35, or more narrowly greater than or equal to 0.20, such as between 0.25 and 0.30. The combination of fan blade counts and fan hub-to-tip ratios disclosed herein can provide the engine 20 with a relatively compact fan arrangement.

The low pressure compressor 44, high pressure compressor 52, high pressure turbine 54 and low pressure turbine 46 each include one or more stages having a row of rotatable airfoils. Each stage may include a row of vanes adjacent the rotatable airfoils. The rotatable airfoils are schematically indicated at 47, and the vanes are schematically indicated at 49.

The low pressure compressor 44 and low pressure turbine 46 can include an equal number of stages. For example, the engine 20 can include a three-stage low pressure compressor 44, an eight-stage high pressure compressor 52, a two-stage high pressure turbine 54, and a three-stage low pressure turbine 46 to provide a total of sixteen stages. In other examples, the low pressure compressor 44 includes a different (e.g., greater) number of stages than the low pressure turbine 46. For example, the engine 20 can include a five-stage low pressure compressor 44, a nine-stage high pressure compressor 52, a two-stage high pressure turbine 54, and a four-stage low pressure turbine 46 to provide a total of twenty stages. In other embodiments, the engine 20 includes a four-stage low pressure compressor 44, a nine-stage high pressure compressor 52, a two-stage high pressure turbine 54, and a three-stage low pressure turbine 46 to provide a total of eighteen stages. It should be understood that the engine 20 can incorporate other compressor and turbine stage counts, including any combination of stages disclosed herein.

The engine 20 may be a high-bypass geared aircraft engine. It should be understood that the teachings disclosed herein may be utilized with various engine architectures, such as low-bypass turbofan engines, prop fan and/or open rotor engines, turboprops, turbojets, etc. The bypass ratio can be greater than or equal to 10.0 and less than or equal to about 18.0, or more narrowly can be less than or equal to 16.0. The geared architecture 48 may be an epicyclic gear train, such as a planetary gear system or a star gear system. The epicyclic gear train may include a sun gear, a ring gear, a plurality of intermediate gears meshing with the sun gear and ring gear, and a carrier that supports the intermediate gears. The sun gear may provide an input to the gear train. The ring gear (e.g., star gear system) or carrier (e.g., planetary gear system) may provide an output of the gear train to drive the fan 42. A gear reduction ratio may be greater than or equal to 2.3, or more narrowly greater than or equal to 3.0, and in some embodiments the gear reduction ratio is greater than or equal to 3.4. The gear reduction ratio may be less than or equal to 4.0. The fan diameter is significantly larger than that of the low pressure compressor 44. The low pressure turbine 46 can have a pressure ratio that is greater than or equal to 8.0 and in some embodiments is greater than or equal to 10.0. The low pressure turbine pressure ratio can be less than or equal to 13.0, or more narrowly less than or equal to 12.0. Low pressure turbine 46 pressure ratio is pressure measured prior to an inlet of low pressure turbine 46 as related to the pressure at the outlet of the low pressure turbine 46 prior to an exhaust nozzle. It should be understood, however, that the above parameters are only exemplary of one embodiment of a geared architecture engine and that the present invention is applicable to other gas turbine engines including direct drive turbofans. All of these parameters are measured at the cruise condition described below.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. The engine parameters described above, and those in the next paragraph are measured at this condition unless otherwise specified.

"Fan pressure ratio" is the pressure ratio across the fan blade 43 alone, without a Fan Exit Guide Vane ("FEGV") system. A distance is established in a radial direction between the inner and outer diameters of the bypass duct 13 at an axial position corresponding to a leading edge of the splitter 29 relative to the engine central longitudinal axis A. The fan pressure ratio is a spanwise average of the pressure ratios measured across the fan blade 43 alone over radial positions corresponding to the distance. The fan pressure ratio can be less than or equal to 1.45, or more narrowly greater than or equal to 1.25, such as between 1.30 and 1.40. "Corrected fan tip speed" is the actual fan tip speed in ft/sec divided by an industry standard temperature correction of [(Tram °R) / (518.7 °R)]^{0.5} (where °R = K * 9/5). The corrected fan tip speed can be less than or equal to 1150.0 ft / second (350.5 meters/second), and can be greater than or equal to 1000.0 ft / second (304.8 meters/second).

The fan 42, low pressure compressor 44 and high pressure compressor 52 can provide different amounts of compression of the incoming airflow that is delivered downstream to the turbine section 28 and cooperate to establish an overall pressure ratio (OPR). The OPR is a product of the fan pressure ratio across a root (i.e., 0% span) of the fan blade 43 alone, a pressure ratio across the low pressure compressor 44 and a pressure ratio across the high pressure compressor 52. The pressure ratio of the low pressure compressor 44 is measured as the pressure at the exit of the low pressure compressor 44 divided by the pressure at the inlet of the low pressure compressor 44. In examples, a sum of the pressure ratio of the low pressure compressor 44 and the fan pressure ratio is between 3.0 and 6.0, or more narrowly is between 4.0 and 5.5. The pressure ratio of the high pressure compressor ratio 52 is measured as the pressure at the exit of the high pressure compressor 52 divided by the pressure at the inlet of the high pressure compressor 52. In examples, the pressure ratio of the high pressure compressor 52 is between 9.0 and 12.0, or more narrowly is between 10.0 and 11.5. The OPR can be equal to or greater than 45.0, and can be less than or equal to 70.0, such as between 50.0 and 60.0. The overall and compressor pressure ratios disclosed herein are measured at the cruise condition described above, and can be utilized in two-spool architectures such as the engine 20 as well as three-spool engine architectures.

The engine 20 establishes a turbine entry temperature (TET). The TET is defined as a maximum temperature of combustion products communicated to an inlet of the turbine section 28 at a maximum takeoff (MTO) condition. The inlet is established at the leading edges of the axially forwardmost row of airfoils of the turbine section 28, and MTO is measured at maximum thrust of the engine 20 at static sea-level and 86 degrees Fahrenheit (°F). The TET may be greater than or equal to 2700.0 °F (1482.2 °C), or more narrowly less than or equal to 3500.0 °F (1926.7 °C), such as between 2750.0 °F (1510.0 °C) and 3350.0 °F (1843.3 °C). The relatively high TET can be utilized in combination with the other techniques disclosed herein to provide a compact turbine arrangement.

The engine 20 establishes an exhaust gas temperature (EGT). The EGT is defined as a maximum temperature of combustion products in the core flow path C communicated to at the trailing edges of the axially aftmost row of airfoils of the turbine section 28 at the MTO condition. The EGT may be less than or equal to 1000.0 °F (537.8 °C), or more narrowly greater than or equal to 800.0 °F (426.7 °C), such as between 900.0 °F (482.2 °C) and 975.0 °F (523.9 °C). The relatively low EGT can be utilized in combination with the other techniques disclosed herein to reduce fuel consumption.

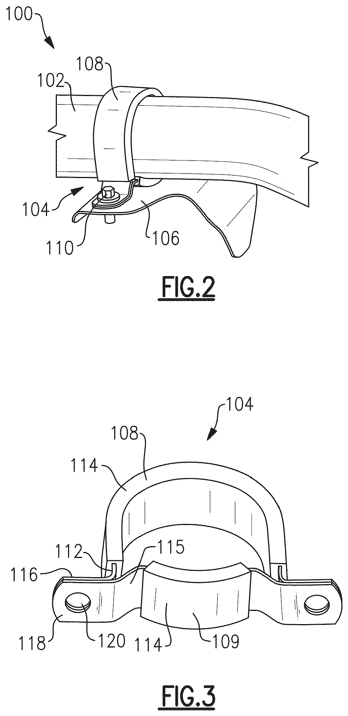

Figure 2 shows a tube assembly 100 having a tube 102 which may be utilized in a gas turbine engine such as that shown in Figure 1. It should be understood that the tube assembly 100 could be utilized in systems other than a gas turbine engine.

A saddle clamp 104 positions and secures the tube 102 to static structure 106. An upper half 108 of the saddle clamp 104 is shown. As explained below, bolt 110 secures two halves of the saddle clamp 104 to the static structure 106.

Figure 3 shows the saddle clamp 104 having the upper half 108 and a lower half 109. The upper half 108 is shown having a rubber grommet 114 on a metal portion 112. The metal portion 112 extends to outwardly extending bolt flanges 116. Similarly, the lower half 109 has a rubber grommet 114 and a metal portion 115 extending to an outwardly extending bolt flange 118. Bolt holes 120 extend through both flanges 116 and 118 to receive bolts.

As shown, there are a pair of the bolt flanges 116/118 on opposed sides of the tube for each of the lower and upper clamp halves 108/109.

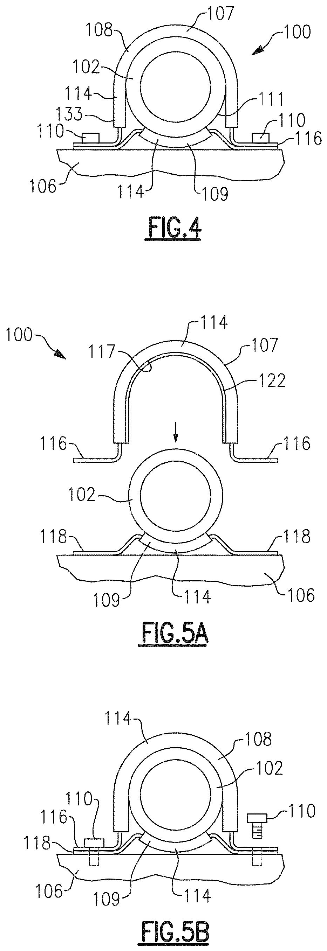

Figure 4 shows the assembly 100 in cross-section. The tube 102 is received in contact with the grommets 114 from the halves 108 and 109. As can be appreciated, upper half 108 covers a good deal more of a circumference of tube 102 than does lower half 109. As shown at 133, the upper clamp half 108 has a cylindrical portion 107 contacting the tube 102. The cylindrical portion 107 extends into legs 133 that do not contact the tube 102 and merge into the bolt flanges 116.

A first step in assembling the tube assembly 100 is illustrated in Figure 5A. The lower half 109 is initially placed on the static surface 106 and the tube 102 is supported on the grommet 114. The larger upper half 108 is brought downwardly onto the tube 102.

As can appreciated from Figure 4, the saddle clamp 104 has its upper half 108 extending for more than half the circumference of the tube 102 whereas the lower half 109 extends for a smaller portion. There is a portion 111 of tube 102 intermediate the grommet portions 114.

Applicant has found that when the upper half 108 is brought onto the tube 102 the bolt flanges 118 have a flush mating with the static surface 106. This generates an anchoring point on the rubber grommet 114. As the upper half 108 is brought onto the tube 102, the clamp halves 108 and 109 must stretch. When this occurs there is a strain in the halves 108 and 109.

As shown in Figure 5A, however, a layer of lubricant 122, which may be liquid oil, such as engine oil, has been placed within an interior surface 117 of the grommet 114 on the upper half 108.

Now, the coefficient of friction of the inner surface of the grommet 114 from the upper half 108 is significantly reduced as it is brought down around the tube 102 as shown in Figure 5B.

One bolt 110 may then be driven through the flanges 116 and 118 to secure the tube 102 and saddle clamp 104 to the underlying static structure 106 on one side.

As shown, one bolt 110 is initially installed and the second bolt 110 is then installed into the opposed side of the clamp halves 108/109.

In the prior art, the bolt flange 116 that has initially been bolted by bolt 110 will experience high stress as the second bolt 110 is being driven.

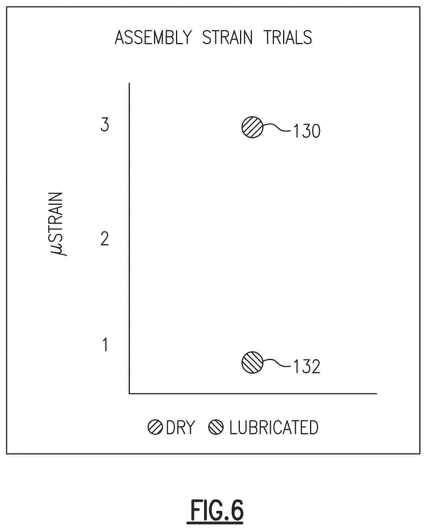

Figure 6 graphically shows the strain associated with assembling the saddle clamp 104 with the lubricant (at 132), and without (at 130). As shown, the strain is reduced by a factor of three.

While a method and apparatus have been disclosed, a worker of skill in this art would recognize that modifications would come within the scope of this disclosure. For that reason, the following claims should be studied to determine the true scope and content of this disclosure.

## Claims

1. A method of assembling a tube assembly (100) comprising the steps of:
providing a saddle clamp (104) having a first clamp half (109) extending for less than 50 percent of a circumference of a tube (102), and a second clamp half (108) extending for more than 50 percent of the circumference of the tube (102);
placing a tube (102) on the first clamp half (109), resting on a static structure (106), and applying a lubricant (122) to a laterally inner surface (117) of the second clamp half (108); and
then bringing the second clamp half (108) onto the tube (102), and then driving a fastener (110) to secure the first and second clamp halves (108, 109).

2. The method as set forth in claim 1, where there are a pair of the bolt flanges (116, 118) on opposed sides of the tube (102) for each of the first and second clamp halves (108, 109).

3. The method as set forth in claim 2, wherein the fastener (110) is initially driven into the bolt flanges (116, 118) on one side of the tube (102), and then a second fastener (110) is driven through the bolt flanges (116, 118) on the other side of the tube (102).

4. The method of claim 3, wherein each of the first and second halves (108, 109) have a metal underlying structure with outwardly extending bolt flanges (116, 118) and a supporting grommet (114) and the fastener (110) extends through the bolt flanges (116, 118).

5. The method as set forth in claim 4, wherein the bolt flanges (116) on the second clamp half (108) rest on the bolt flanges (118) of the first clamp half (108).

6. The method as set forth in any preceding claim, wherein the lubricant (122) is only placed on the inner surface (117) of the second clamp half (108).

7. The method as set forth in any preceding claim, wherein the fastener (110) secures the saddle clamp (104) to the static structure (106).

8. The method as set forth in any preceding claim, wherein the lubricant (122) is a liquid.

9. A gas turbine engine (20) comprising:
a compressor section (24), a turbine section (28) and combustor (56); and
a tube assembly (100) for routing a fluid for use in the gas turbine engine (20);
the tube assembly (100) having a saddle clamp (104) with a first clamp half (109) extending for less than 50 percent of a circumference of a tube (102), and a second clamp half (108) extending for more than 50 percent of the circumference of the tube (102), each of the first and second half (108, 109) having a metal underlying structure with outwardly extending bolt flanges (116, 118) and a supporting grommet (114);
the tube (102) supported on the grommets (114) of the first and second clamp halves (108, 109), with the bolt flange (118) of the first clamp half (109) resting on a static structure (106), and a lubricant (122) on a laterally inner surface (117) of the second clamp half (108); and
a bolt (110) extending through the bolt flanges (116, 118) to secure the first and second clamp halves (108, 109) to the static structure (106).

10. The gas turbine engine (20) as set forth in claim 9, where there are a pair of the bolt flanges (116, 118) on opposed sides of the tube (102) for each of the first and second clamp halves (108, 109).

11. The gas turbine engine (20) as set forth in claim 9 or 10, wherein lubricant (122) is not on the first clamp half (109).

12. The gas turbine engine (20) as set forth in claim 9, 10 or 11, wherein the lubricant (122) is a liquid.
